# EUROPEAN PATENT APPLICATION

(11) **EP 4 717 512 A1**
(43) Date of publication of application: **01.04.2026**
(21) Application number: 25175791.0
(22) Date of filing: 12.05.2025
(51) Int. Cl.: B60L 53/30, B60L 53/66

(54) **SCREEN CASTING METHOD, SCREEN CASTING APPARATUS, ELECTRONIC DEVICE, AND STORAGE MEDIUM**

(30) Priority: 27.09.2024 CN 202411369731
(71) Applicant: Sungrow Charging Technology Co., Ltd., Hefei, Anhui 230088 (CN)
(72) Inventor: CHEN, Chaoqi, Hefei, 230088 (CN); NING, Bo, Hefei, 230088 (CN)
(74) Representative: DREISS Patentanwälte PartG mbB

(57) **Abstract**

Provided are a screen casting method, a screen casting apparatus, an electronic device, and a storage medium, which belongs to the field of communication technologies. The method includes: establishing a near-field communication connection with a vehicle; and sending, when the near-field communication connection is successfully established, first information to an electronic device related to the vehicle, to cause the electronic device to display a first interface. The first interface is a human-computer interaction interface corresponding to the charging pile. According to the provided screen casting method, the charging pile is no longer required to provide the human-computer interaction interface. In this way, the cost of the charging pile is reduced, and the user experience is improved.

## Description

### FIELD

The present disclosure belongs to the field of communication technologies, and more particularly relates to a screen casting method, a screen casting apparatus, an electronic device, and a storage medium.

### BACKGROUND

Currently, electric vehicles use charging piles for charging operations, which are usually based on human-computer interactions. That is, a person needs to go to the charging pile to perform necessary operations such as QR (Quick Response) code scanning and NFC (Near Field Communication) card swiping. Only after the person passes verification, the charging pile begins to supply power to the vehicle.

A demand for smoothness of human-computer interaction interfaces has increased costs of building interaction interfaces of the charging piles. In addition, the charging piles are mostly located in open-air places or open regions due to safety considerations, which also pose challenges to durability and low failure rates of the interaction interfaces.

### SUMMARY

The present disclosure aims to solve at least one of the technical problems in the related art. To this end, the present disclosure provides a screen casting method, a screen casting apparatus, an electronic device, and a storage medium. Therefore, a screen is no longer provided in a charging pile for providing a human-computer interaction interface. In this way, the cost of the charging pile is reduced, and user experience is improved.

In a first aspect, the present disclosure provides a screen casting method applied in a charging pile. The screen casting method includes: establishing a near-field communication connection with a vehicle; and sending, when the near-field communication connection is successfully established, first information to an electronic device related to the vehicle, to cause the electronic device to display a first interface. The first interface is a human-computer interaction interface corresponding to the charging pile.

In the above technical solution, the near-field communication connection between the charging pile and the vehicle is established, and the information is sent to the electronic device related to the vehicle, to cause the electronic device related to the vehicle to display the human-computer interaction interface. Therefore, a user can perform relevant charging operations on the electronic device related to the vehicle, and a charging process can be completed without directly operating the charging pile. Moreover, the charging pile is no longer required to provide the human-computer interaction interface. In this way, the cost of the charging pile is reduced, and the user experience is improved.

In a second aspect, the present disclosure provides a screen casting method applied in an electronic device related to a vehicle. The screen casting method includes: establishing a near-field communication connection with a charging pile; and receiving, when the near-field communication connection is successfully established, first information sent by the charging pile to display a first interface. The first interface is a human-computer interaction interface corresponding to the charging pile.

In the above technical solution, the screen casting method is applied in the electronic device related to the vehicle. The near-field communication connection is established between the electronic device related to the vehicle and the charging pile, the first information sent by the charging pile is received, and the human-computer interaction interface is displayed. Therefore, the user can perform the relevant charging operations on the electronic device related to the vehicle, and the charging process can be completed without directly operating the charging pile. Moreover, the charging pile is no longer required to provide the human-computer interaction interface. In this way, the cost of the charging pile is reduced.

In a third aspect, the present disclosure provides a screen casting apparatus applied in a charging pile. The screen casting apparatus includes a first communication unit configured to: establish a near-field communication connection with a vehicle, and send, when the near-field communication connection is successfully established, first information to an electronic device related to the vehicle, to cause the electronic device to display a first interface. The first interface is a human-computer interaction interface corresponding to the charging pile.

In the above technical solution, in the screen casting apparatus, the near-field communication connection between the charging pile and the vehicle is established, and the information is sent to the electronic device related to the vehicle, to cause the electronic device related to the vehicle to display the human-computer interaction interface. Therefore, the user can perform the relevant charging operations on the electronic device related to the vehicle, and the charging process can be completed without directly operating the charging pile. Moreover, the charging pile is no longer required to provide the human-computer interaction interface. In this way, the cost of the charging pile is reduced.

In a fourth aspect, the present disclosure provides a screen casting apparatus applied in an electronic device related to a vehicle. The screen casting apparatus includes: a second communication unit configured to establish a near-field communication connection with a charging pile; and a first processing unit configured to receive, when the near-field communication connection is successfully established, first information sent by the charging pile to display a first interface. The first interface is a human-computer interaction interface corresponding to the charging pile.

In the above technical solution, in the screen casting apparatus, the near-field communication connection is established between the electronic device related to the vehicle and the charging pile, the first information sent by the charging pile is received, and the human-computer interaction interface is displayed. Therefore, the user can perform the relevant charging operations on the electronic device related to the vehicle, and the charging process can be completed without directly operating the charging pile. Moreover, the charging pile is no longer required to provide the human-computer interaction interface. In this way, the cost of the charging pile is reduced.

In a fifth aspect, the present disclosure provides an electronic device. The electronic device includes a memory, a processor, and a computer program stored in the memory and executable by the processor. The processor, when executing the computer program, implements the screen casting method as described in the above-mentioned first aspect or the screen casting method as described in the above-mentioned second aspect.

In a sixth aspect, the present disclosure provides a non-transitory computer-readable storage medium. The storage medium has a computer program stored thereon. The computer program, when executed by a processor, implements the screen casting method as described in the above-mentioned first aspect or the screen casting method as described in the above-mentioned second aspect.

In a seventh aspect, the present disclosure provides a chip. The chip includes a processor and a communication interface. The communication interface is coupled to the processor. The processor is configured to execute a program or instructions to implement the screen casting method as described in the above-mentioned first aspect or the screen casting method as described in the above-mentioned second aspect.

In an eighth aspect, the present disclosure provides a computer program product, which includes a computer program. The computer program, when executed by a processor, implements the screen casting method as described in the above-mentioned first aspect or the screen casting method as described in the above-mentioned second aspect.

Additional aspects and advantages of present disclosure will be provided in part in the following description, or will become apparent in part from the following description, or can be learned from the practice of the present disclosure.

### BRIEF DESCRIPTION OF THE DRAWINGS

The above and/or additional aspects and advantages of the present disclosure will become apparent and more readily appreciated from the following descriptions made with reference to the accompanying drawings.
FIG. 1 is a schematic flowchart of a screen casting method according to an embodiment of the present disclosure.
FIG. 2 is a schematic diagram of establishing a near-field communication connection with a vehicle according to an embodiment of the present disclosure.
FIG. 3 is another schematic diagram of establishing a near-field communication connection with a vehicle according to an embodiment of the present disclosure.
FIG. 4 is a schematic diagram of a human-computer interaction interface according to an embodiment of the present disclosure.
FIG. 5 is another schematic diagram of a human-computer interaction interface according to an embodiment of the present disclosure.
FIG. 6 is another schematic flowchart of a screen casting method according to an embodiment of the present disclosure.
FIG. 7 is a schematic structural diagram of a screen casting apparatus according to an embodiment of the present disclosure.
FIG. 8 is another schematic structural diagram of a screen casting apparatus according to an embodiment of the present disclosure.
FIG. 9 is a schematic structural diagram of an electronic device according to an embodiment of the present disclosure.

### DETAILED DESCRIPTION

Technical solutions in the embodiments of the present disclosure will be clearly described with reference to accompanying drawings of the embodiments of the present disclosure. Apparently, the embodiments described here are only part of the embodiments of the present disclosure and are not all embodiments of the present disclosure. Based on the embodiments of the present disclosure, all other embodiments obtained by those skilled in the art fall within the protection scope of the present disclosure.

Terms "first", "second", etc., in the description and claims of the present disclosure are intended to distinguish similar objects, and are not intended to describe a specific order or a priority relationship. It should be understood that pieces of data used in this way can be interchanged where appropriate, in order that the embodiments of the present disclosure can be implemented in an order other than those illustrated or described herein. Furthermore, the terms "first", "second", etc., are generally used to distinguish objects of one type, but do not limit the number of objects. For example, one or more first objects may be provided. In addition, the term "and/or" in the description and claims indicates at least one of the objects connected by the term "and/or", and the symbol "/" generally indicates an "or" relationship between the correlated objects preceding and succeeding the symbol.

Reference herein to "an embodiment" means that a particular feature, structure or characteristic described in conjunction with the embodiment can be included in at least one embodiment of the present disclosure. Appearances of this phrase in various places in the specification are not necessarily all referring to the same embodiment, nor are separate or alternative embodiments mutually exclusive of other embodiments. Those skilled in the art understand, both explicitly and implicitly, that the embodiments described herein may be combined with other embodiments.

A screen casting method, a screen casting apparatus, an electronic device, and a readable storage medium according to embodiments of the present disclosure will be described in detail below with reference to the accompanying drawing, by means of specific embodiments and application scenarios thereof.

Embodiments of the present disclosure provide a screen casting method, which is applied in a charging pile. That is, an execution subject of the screen casting method may be a charging pile, or a functional module or functional entity in the charging pile that can implement the screen casting method. The screen casting method according to the embodiments of the present disclosure will be described below by using an example in which the charging pile is the execution subject.

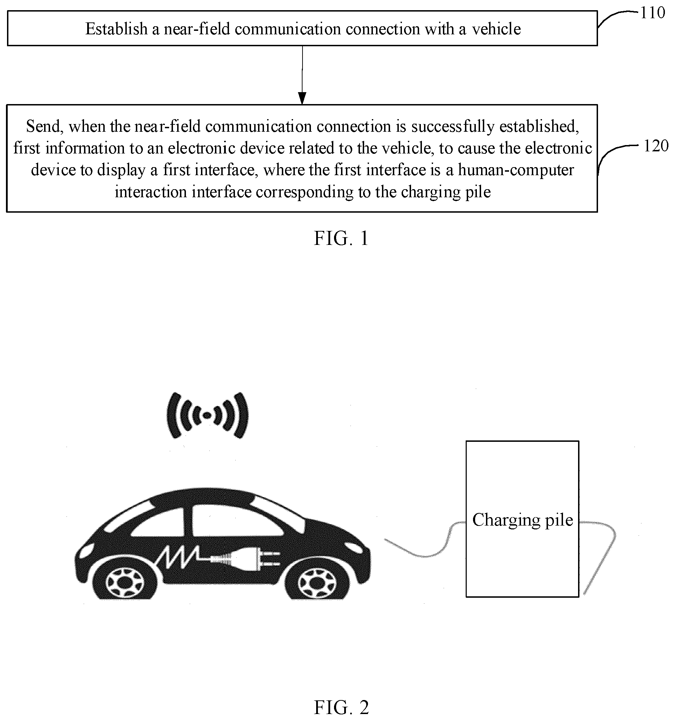

FIG. 1 is a schematic flowchart of a screen casting method according to an embodiment of the present disclosure. As illustrated in FIG. 1, the screen casting method includes steps 110 and 120.

At step 110, establish a near-field communication connection with a vehicle.

Establishing the near-field communication connection between the charging pile and the vehicle primarily aims to realize an information interaction during a charging process. It is detected by the charging pile that whether the vehicle meets conditions for establishing the near-field communication connection. Specifically, by determining a state of an interface connection between the charging pile and the vehicle, a communication distance between the charging pile and the vehicle or the electronic device related to the vehicle, or an installation state of an application for controlling the charging pile on the electronic device related to the vehicle, to constitute different conditions for establishing communication connections. Therefore, the near-field communication connection between the vehicle and the charging pile can be flexibly triggered based on the specific states of the vehicle and the electronic device related to the vehicle.

FIG. 2 is a schematic diagram of establishing a near-field communication connection with a vehicle according to an embodiment of the present disclosure. As illustrated in FIG. 2, when the charging pile has not established the near-field communication connection with the vehicle, the charging pile cannot perform data transmission and interaction with the electronic device related to the vehicle.

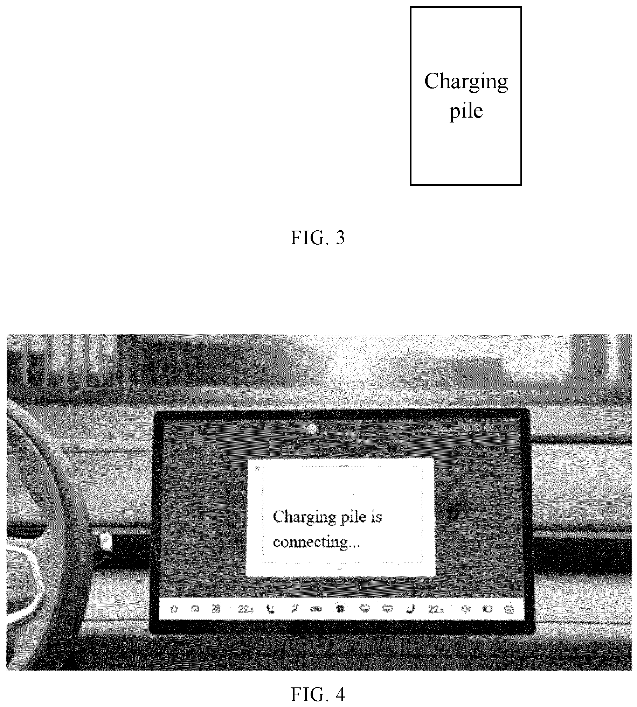

FIG. 3 is another schematic diagram of establishing a near-field communication connection with a vehicle according to an embodiment of the present disclosure. As illustrated in FIG. 3, the charging pile is triggered to establish the near-field communication connection with the vehicle in response to satisfying a condition of establishing the near-field communication connection with the vehicle.

At step 120, send, when the near-field communication connection is successfully established, first information to an electronic device related to the vehicle, to cause the electronic device to display a first interface. The first interface is a human-computer interaction interface corresponding to the charging pile.

It can be understood that the first information is sent to the electronic device related to the vehicle to cause the electronic device to display the first interface, which realizes the casting of the first interface to the electronic device related to the vehicle for the display.

Optionally, the first information may contain identification information (such as serial number, model number, and position) of the charging pile, and therefore the vehicle or the electronic device related to the vehicle can confirm relevant information of the charging pile that currently establishes a connection or interacts with the vehicle or the electronic device. The first information can be used to guide the electronic device (such as a mobile phone and an in-vehicle display screen) related to the vehicle to display a human-computer interaction interface (i.e., the first interface) corresponding to the charging pile.

The human-computer interaction interface is an important medium for information exchange and operation control between the charging pile and a user. The user can quickly understand and operate the charging pile. By sending the human-computer interaction interface to the electronic device related to the vehicle, such as an in-vehicle terminal or a user terminal, the charging pile can be directly operated through the in-vehicle terminal or the user terminal, which simplifies a charging process and improves user experience.

FIG. 4 is a schematic diagram of a human-computer interaction interface according to an embodiment of the present disclosure. The human-computer interaction interface illustrated in FIG. 4 is an interaction interface in an ongoing connection with the charging pile displayed by the electronic device related to the vehicle.

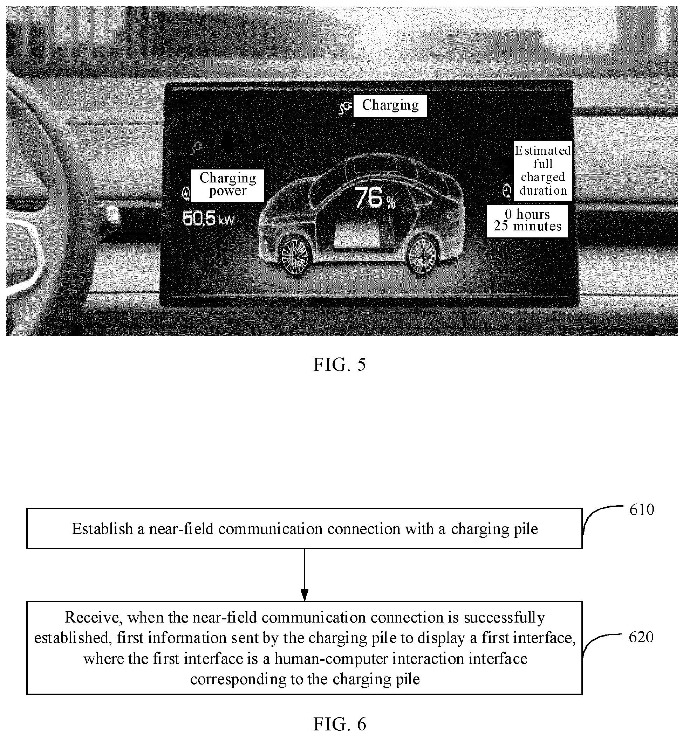

FIG. 5 is another schematic diagram of a human-computer interaction interface according to an embodiment of the present disclosure. As illustrated in FIG. 5, when the near-field communication connection is successfully established, the first information is received by the electronic device related to the vehicle to display the human-computer interaction interface (the first interface) corresponding to the charging pile.

Optionally, the human-computer interaction interface here may be diverse due to different functions of the charging pile and different user requirements. It may be a simple and clear charging state interface, which displays basic information such as a current charged electric amount, an estimated completion duration, a charging cost, a charging voltage, and a charging current. It may also be a feature-rich operation interface, which allows the user to select a charging mode, set up a charging parameter, and view historical charging records. Operation forms of the user may include clicking, touching, sliding, etc., or the interaction is completed through voice instructions.

In the above technical solution, the near-field communication connection between the charging pile and the vehicle is established, and the information is sent to the electronic device related to the vehicle, to cause the electronic device related to the vehicle to display the human-computer interaction interface. Therefore, the user can perform the relevant charging operations on the electronic device related to the vehicle, and the charging process can be completed without directly operating the charging pile. Moreover, the charging pile is no longer required to provide the human-computer interaction interface. In this way, the cost of the charging pile is reduced.

In an embodiment of the present disclosure, the establishing the near-field communication connection with the vehicle includes: establishing the near-field communication connection with the vehicle in response to detecting that the vehicle has established an interface connection with the charging pile; or establishing the near-field communication connection with the vehicle in response to detecting that no first application is installed on the electronic device, in which the first application is an application for controlling the charging pile; or establishing the near-field communication connection with the vehicle in response to detecting that the vehicle or the electronic device is within a first range of the charging pile.

It should be noted that since the charging pile is a device that provides a power service, a functional improvement of the charging pile and user convenience generally need to be realized through related applications. The first application herein refers to an application for controlling the charging pile, which may be software developed by manufacturers or related service providers of the charging pile. The first application allows the user to control, through the electronic device, various functions of the charging pile that establishes the near-field communication connection with the vehicle. The functions may include starting and stopping a charging process, setting a charging parameter (such as a current, a voltage, and a charging duration), checking a charging state (such as a charged electric amount and a remaining charging duration), and paying charging fees, etc., or may include helping the user find nearby charging piles and select target charging piles, displaying past charging activities and fees of the user, allowing the user' behaviors of adjusting the application according to their personal preferences, etc., to provide the user with more convenient and smarter charging services.

The first range refers to a specific physical region or a distance range that defines a boundary within which the charging pile can automatically detect and establish a near-field communication connection with nearby vehicles or electronic devices. This range is determined by performance characteristics of a communication module and a sensor or other components of the charging pile. The charging piles of different brands and model numbers may have different first ranges. The charging pile can detect presence of the vehicle or the electronic device (such as a smartphone) related to the vehicle entering the first range and attempt to establish the near-field communication connection.

It can be understood that establishing the communication connection between the charging pile and the vehicle includes: establishing a direct interface connection between the vehicle and the charging pile, in which, for example, a charging gun of the charging pile is inserted into a charging port of the vehicle; or establishing the near-field communication connection with the vehicle when the electronic device related to the vehicle is within a communication range of the charging pile or when no application for controlling the charging pile is installed on the electronic device.

In one embodiment, in response to detecting the vehicle has an interface connection with the charging pile, the near-field communication connection is established between the charging pile and the vehicle, and direct physical contact is established between the vehicle and the charging pile. For example, the charging gun of the charging pile is inserted into the charging port of the vehicle, and the charging pile can establish the communication connection with the vehicle. Thus, connection diversity of the screen casting method is enhanced.

In one embodiment, the near-field communication connection is established between the charging pile and the vehicle when no first disclosure is installed on the electronic device. Therefore, the communication connection between the vehicle and the charging pile is realized when no application for controlling the charging pile is installed on the electronic device. Thus, the connection diversity of the screen casting method is enhanced.

In one embodiment, the near-field communication connection is established between the charging pile and the vehicle in response to detecting that the electronic device is within a first range of the charging pile. This connection manner utilizes the communication range of the charging pile, and the charging pile can establish the communication connection with the vehicle in response to detecting that the electronic device is within the communication range of the charging pile. This connection manner enhances compatibility of the screen casting method.

In the above technical solution, the near-field communication connection between the charging pile and the vehicle can be flexibly established based on whether the vehicle has the interface connection with the charging pile, or whether the electronic device is within the communication range of the charging pile, or whether the application for controlling the charging pile is installed on the electronic device. In this way, usability and applicability of the screen casting method are improved. In addition, by establishing the near-field communication connection between the charging pile and the electronic device on which no application for controlling the charging pile is installed, the user can directly perform related charging operations on the electronic device and enjoy a charging service without installing a corresponding application. In this way, the user experience is improved.

In an embodiment of the present disclosure, the electronic device related to the vehicle includes at least one of an on-board device of the vehicle, an electronic device in the vehicle, an electronic device within a first range of the charging pile.

The on-board device of the vehicle is a built-in information system of the vehicle, which generally has rich functions, such as navigation, music playback, telephone communication, and vehicle status monitoring. The on-board device is directly integrated into the vehicle and is an important interface for the near-field communication between the charging pile and the vehicle.

The electronic device in the vehicle includes an electronic device that can be connected to the charging pile through near-field communication technology, such as a smartphone, a tablet computer, and an in-vehicle charger. These devices may not directly participate in the charging process, but can establish a connection with the charging pile through the near-field communication technology (such as NFC and Bluetooth), which is used for auxiliary functions such as identity verification, payment verification, and charging parameter setting. For example, the user may use the smartphone to interact with the charging pile through near-field communication to complete payment of charging fees.

The first range refers to a physical region in which the charging pile can automatically detect and establish the near-field communication connection with a nearby electronic device. The electronic device within this range, whether built in vehicles or carried by the user, may be identified by the charging pile and establish a connection with the charging pile if the electronic device supports the near-field communication technology. With such design, the charging pile is more flexible and intelligent and can interact with different types of electronic devices according to different usage scenarios and requirements.

In the above technical solution, the electronic device related to the vehicle includes the on-board device of the vehicle, the electronic device in the vehicle, and any electronic device supporting the near-field communication and located within the first range of the charging pile. These devices cover different usage scenarios and requirements when the vehicle is charged by using the charging pile, which enhances flexibility and compatibility of the screen casting method. In addition, different usage scenarios are met according to the user' requirements, which improves the user experience.

In an embodiment of the present disclosure, the sending the first information to the electronic device related to the vehicle includes at least one of: sending the first information to the on-board device of the vehicle when a user is in the vehicle or the vehicle is in a started state, in which it can be understood that the started state of the vehicle may refer to a state where only an in-vehicle screen is powered; sending, when the vehicle is not started, the first information to the electronic device in the vehicle or to the electronic device within the first range of the charging pile; sending the first information to the electronic device within the first range of the charging pile when no user is in the vehicle.

When the user is in the vehicle or the vehicle is in the started state, it is considered that the user can interact with the charging pile through the on-board device. When the vehicle is not started, the operation of the on-board device is limited. In this case, the first information may be sent to the electronic device in the vehicle or the electronic device within the first range of the charging pile.

In the above technical solution, by determining whether the user is in the vehicle and whether the vehicle is started, different devices are selected to send the first information to realize screen casting on the different devices. In this way, the flexibility of the screen casting method is enhanced, ensuring that the user can timely receive the first information in a variety of scenarios. As a result, the user experience is improved.

A screen casting method according to the embodiments of the present disclosure is applied in the electronic device related to the vehicle. An execution subject of the screen casting method may be an electronic device or a functional module or a functional entity that can implement the screen casting method in the electronic device. The electronic device mentioned in the embodiments of the present disclosure includes but is not limited to a mobile phone, a tablet computer, a computer, a camera, a wearable device, etc. The screen casting method according to the embodiments of the present disclosure will be described below using an example in which the electronic device is the execution subject.

FIG. 6 is another schematic flowchart of a screen casting method according to an embodiment of the present disclosure. As illustrated in FIG. 6, the screen casting method includes steps 610 and 620.

At step 610, establish a near-field communication connection with a charging pile.

It should be noted that since communication technology and protocols between the electronic device related to the vehicle and the charging pile may vary among different brands and different model numbers, and manners of establishing the near-field communication connection with the charging pile may also be diverse. Bluetooth technology may be adopted to establish a connection after verification with a pairing code, Wi-Fi technology may be adopted to realize wireless high-speed data transmission, or NFC may be adopted to realize data exchange between devices within a short distance. These connection manners are selected depending on specific configurations of the charging pile and the vehicle or a user device as well as requirements for communication speed, stability, and security in the use scenarios. Regardless of the adopted manner, establishing the communication connection aims to realize an efficient data interaction between the electronic device related to the vehicle and the charging pile, thereby providing better user experience and services. The electronic device related to the vehicle needs to identify and approach the charging pile in order to establish the near-field communication connection.

At step 620, receive, when the near-field communication connection is successfully established, first information sent by the charging pile to display a first interface. The first interface is a human-computer interaction interface corresponding to the charging pile.

The first information may contain identification information (such as serial number, model number, and position) of the charging pile, and therefore the vehicle or the electronic device related to the vehicle can confirm relevant information of the charging pile that currently establishes a connection or interacts with the vehicle or the electronic device. The first information can be used to guide the electronic device (such as a mobile phone APP and an in-vehicle display screen) related to the vehicle to display a human-computer interaction interface (i.e., the first interface) corresponding to the charging pile.

The human-computer interaction interface is an important medium for information exchange and operation control between the charging pile for the electric vehicle and the user. The user can quickly understand and operate the charging pile without a lengthy learning and adaptation process. By sending the human-computer interaction interface to an in-vehicle terminal or a user terminal, the charging pile can be directly operated through the in-vehicle terminal or the user terminal, which simplifies the charging process and improves the user experience.

Optionally, the human-computer interaction interface herein may be diverse due to the different functions of the electronic device related to the vehicle and different user requirements. It may be a simple and clear charging state interface, which displays basic information such as a current charged electric amount, an estimated completion duration, a charging cost, a charging voltage, and a charging current. It may also be a feature-rich operation interface, which allows the user to select a charging mode, set up a charging parameter, and view historical charging records. Operation forms of the user may include clicking, touching, sliding, etc., or the interaction is completed through voice instructions.

In the above technical solution, the screen casting method is applied in the electronic device related to the vehicle. The near-field communication connection is established between the electronic device related to the vehicle and the charging pile, the first information sent by the charging pile is received, and the human-computer interaction interface is displayed. Therefore, the user can perform the relevant charging operations on the electronic device related to the vehicle, and the charging process can be completed without directly operating the charging pile. Moreover, the charging pile is no longer required to provide the human-computer interaction interface. In this way, the cost of the charging pile is reduced.

In an embodiment of the present disclosure, the establishing the near-field communication connection with the charging pile includes: establishing the near-field communication connection between the electronic device and the charging pile in response to detecting that the vehicle has established an interface connection with the charging pile; or establishing the near-field communication connection between the electronic device and the charging pile in response to detecting that no first application is installed on the electronic device, where the first application is an application for controlling the charging pile; or establishing the near-field communication connection between the electronic device and the charging pile in response to detecting that the vehicle or the electronic device is within a first range of the charging pile.

It should be noted that since the electronic device related to the vehicle does not inherently possess the function of controlling the charging pile, the control of the charging pile in this embodiment needs to be realized through related applications. The first application herein refers to an application for controlling the charging pile, which may be a software developed by manufacturers or related service providers of the charging pile. The first application allows the user to control, through the electronic device, various functions of the charging pile that establishes the near-field communication connection with the vehicle. The functions may include starting and stopping a charging process, setting a charging parameter (such as a current, a voltage, and a charging duration), checking a charging state (such as a charged electric amount and a remaining charging duration), and paying charging fees, etc., or may include helping the user find nearby charging piles and select target charging piles, configuring charging settings (such as to select a charging duration and charging power), displaying past charging activities and fees of the user, allowing the user' behaviors of adjusting the application according to their personal preferences, etc., to provide the user with more convenient and smarter charging services.

The first range refers to a specific physical region or a distance range that defines a boundary within which the charging pile can automatically detect and establish a near-field communication connection with nearby vehicles or electronic devices. This range is determined by performance characteristics of a communication module and a sensor or other components of the charging pile. The charging piles of different brands and model numbers may have different first ranges. The charging pile can detect presence of the vehicle or the electronic device (such as a smartphone) related to the vehicle entering the first range and attempt to establish the near-field communication connection.

In an embodiment of the present disclosure, the method further includes, prior to the establishing the near-field communication connection with the charging pile: obtaining a state of a near-field communication function of the electronic device; and sending an instruction when the near-field communication function of the electronic device is not enabled, to enable the near-field communication function of the electronic device.

In order to enable the charging pile to successfully establish the near-field communication connection with the vehicle to perform subsequent charging operations or data transmission, it is necessary to check whether the near-field communication function of the electronic device has been enabled before attempting to establish the near-field communication connection with the vehicle. If the near-field communication function is not enabled, all near-field communication-based connection attempts are likely to fail. The checking manner may be realized depending on an operating system of the electronic device and specific near-field communication technology. For example, for a Bluetooth-enabled electronic device, it is possible to obtain an on/off state of the Bluetooth function by querying setting parameters of the electronic device or a specific API interface.

The charging pile may send an instruction to the electronic device or trigger an event in response to detecting that the near-field communication function of the electronic device is not enabled to request or force the electronic device to enable its near-field communication function. The instruction or the event is also realized depending on the type of electronic device and the operating system. For example, if the electronic device is a smartphone, it may be possible to request the user to manually enable the near-field communication function by sending a notification or popping up a prompt box. Or, in some cases, if the electronic device supports remote control or automated scripts, it may also be possible to enable the near-field communication function by directly sending an instruction (it is generally required that the electronic device have already been subject to corresponding permission settings and security authentication).

In the above technical solution, the state of the near-field communication function of the electronic device is obtained before the near-field communication connection is established between the charging pile and the vehicle. If the near-field communication function is not enabled, an instruction is sent to activate the near-field communication function without the manual operation by the user. Thus, the near-field communication connection between the charging pile and the vehicle can be quickly realized.

In the above technical solution, the near-field communication connection between the electronic device related to the vehicle and the charging pile can be flexibly established based on whether the vehicle has the interface connection with the charging pile, or whether the electronic device is within the communication range of the charging pile, or whether the application for controlling the charging pile is installed on the electronic device. In this way, the usability and the applicability of the screen casting method are improved. In addition, for the electronic device on which no application for controlling the charging pile is installed, by establishing a near-field communication connection with charging piles, the user can directly perform the related charging operations on the electronic device without installing the corresponding application. In this way, the user experience is improved.

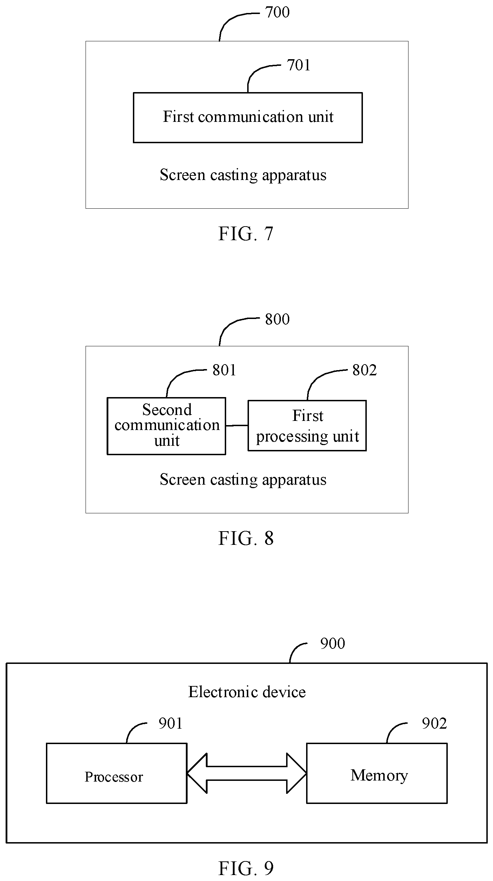

FIG. 7 is a schematic structural diagram of a screen casting apparatus according to an embodiment of the present disclosure. As illustrated in FIG. 7, the screen casting apparatus 700 includes a first communication unit 701. The first communication unit 701 is configured to: establish a near-field communication connection with a vehicle, and send, when the near-field communication connection is successfully established, first information to an electronic device related to the vehicle, to cause the electronic device to display a first interface. The first interface is a human-computer interaction interface corresponding to the charging pile.

Optionally, the first communication unit 701 is configured to: establish the near-field communication connection with the vehicle in response to detecting that the vehicle has established an interface connection with the charging pile; or establish the near-field communication connection with the vehicle in response to detecting that no first application is installed on the electronic device, where the first application is an application for controlling the charging pile; or establish the near-field communication connection with the vehicle in response to detecting that the vehicle or the electronic device is within a first range of the charging pile.

Optionally, the electronic device related to the vehicle includes at least one of an on-board device of the vehicle, an electronic device in the vehicle, an electronic device within a first range of the charging pile.

Optionally, the sending the first information to the electronic device related to the vehicle includes at least one of: sending the first information to the on-board device of the vehicle when a user is in the vehicle or the vehicle is in a started state; sending, when the vehicle is not started, the first information to the electronic device in the vehicle or to the electronic device within the first range of the charging pile; sending the first information to the electronic device within the first range of the charging pile when no user is in the vehicle.

In the above technical solution, in the screen casting apparatus, the near-field communication connection between the charging pile and the vehicle is established, and the information is sent to the electronic device related to the vehicle, to cause the electronic device related to the vehicle to display the human-computer interaction interface. Therefore, the user can perform the relevant charging operations on the electronic device related to the vehicle, and the charging process can be completed without directly operating the charging pile. Moreover, the charging pile is no longer required to provide the human-computer interaction interface. In this way, the cost of the charging pile is reduced.

The screen casting apparatus according to the embodiments of the present disclosure may be a component in a charging pile, such as an integrated circuit or a chip. The screen casting apparatus is not specifically limited in the embodiments of the present disclosure.

The screen casting apparatus according to the embodiments of the present disclosure may be a device with an operating system. The operating system may be a Microsoft (Windows) operating system, an Android operating system, an IOS operating system, and other possible operating systems. The operating system is not specifically limited in the embodiments of the present disclosure.

The screen casting apparatus according to the embodiments of the present disclosure can realize the various processes implemented in the above-mentioned embodiments of the screen casting method, and details thereof are omitted in order to avoid repetition.

FIG. 8 is another schematic structural diagram of a screen casting apparatus according to an embodiment of the present disclosure. As illustrated in FIG. 8, the screen casting apparatus 800 includes a second communication unit 801 and a first processing unit 802. The second communication unit 801 is configured to establish a near-field communication connection with a charging pile. The first processing unit 802 is configured to receive, when the near-field communication connection is successfully established, first information sent by the charging pile to display a first interface. The first interface is a human-computer interactive interface corresponding to the charging pile.

Optionally, the second communication unit 801 is configured to: establish the near-field communication connection between the electronic device and the charging pile in response to detecting that the vehicle has established an interface connection with the charging pile; or establish the near-field communication connection between the electronic device and the charging pile in response to detecting that no first application is installed on the electronic device, where the first application is an application for controlling the charging pile; or establish the near-field communication connection between the electronic device and the charging pile in response to detecting that the vehicle or the electronic device is within a first range of the charging pile.

Optionally, the second communication unit 801 is further configured to, prior to establishing the near-field communication connection with the charging pile: obtain a state of a near-field communication function of the electronic device; and send an instruction when the near-field communication function of the electronic device is not enabled, to enable the near-field communication function of the electronic device.

In the above technical solution, in the screen casting apparatus, the near-field communication connection is established between the electronic device related to the vehicle and the charging pile, the first information sent by the charging pile is received, and the human-computer interaction interface is displayed. Therefore, the user can perform the relevant charging operations on the electronic device related to the vehicle, and the charging process can be completed without directly operating the charging pile. Moreover, the charging pile is no longer required to provide the human-computer interaction interface. In this way, the cost of the charging pile is reduced.

The screen casting apparatus according to the embodiments of the present disclosure may be an electronic device related to a vehicle, or a component in an electronic device related to a vehicle, such as an integrated circuit or a chip. The screen casting apparatus is not specifically limited in the embodiments of the present disclosure.

The screen casting apparatus according to the embodiments of the present disclosure may be a device with an operating system. The operating system may be a Microsoft (Windows) operating system, an Android operating system, an IOS operating system, and other possible operating systems. The operating system is not specifically limited in the embodiments of the present disclosure.

The screen casting apparatus according to the embodiments of the present disclosure can realize the various processes implemented in the above-mentioned embodiments of the screen casting method, and details thereof are omitted herein in order to avoid repetition.

In some embodiments, as illustrated in FIG. 9, the embodiments of the present disclosure also provide an electronic device 900, which includes a processor 901, a memory 902, and a computer program stored in the memory 902 and executable by the processor 901. The program, when executed by the processor 901, implements all the processes of the screen casting method in the above-mentioned embodiments and can achieve the same technical effects, and details thereof are omitted herein in order to avoid repetition.

It should be noted that the electronic device in the embodiments of the present disclosure includes the mobile electronic device and non-mobile electronic device described above.

Embodiments of the present disclosure also provide a non-transitory computer-readable storage medium, which has a computer program stored thereon. The computer program, when executed by a processor, implements all the processes of the screen casting method in the above-mentioned embodiments and can achieve the same technical effects, and details thereof are omitted herein in order to avoid repetition.

The processor is the processor in the electronic device described in the above-mentioned embodiments. The readable storage medium includes a computer-readable storage medium, such as a computer read-only memory (ROM), a random access memory (RAM), a magnetic disk, or an optical disk.

Embodiments of the present disclosure also provide a computer program product, which includes a computer program. The computer program, when executed by a processor, implements the above-mentioned screen casting method.

The processor is the processor in the electronic device described in the above-mentioned embodiments. The readable storage medium includes a computer-readable storage medium, such as a computer read-only memory (ROM), a random access memory (RAM), a magnetic disk, or an optical disk.

Embodiments of the present disclosure also provide a chip, which includes a processor and a communication interface. The communication interface is coupled to the processor. The processor is configured to execute a program or instructions to implement all the processes of the screen casting method in the above-mentioned embodiments and can achieve the same technical effects, and details thereof are omitted herein in order to avoid repetition.

It should be understood that the chip mentioned in the embodiments of the present disclosure may also be referred as a system-on-chip, a system chip, a chip system, or a system-on-a-chip, etc.

It should be noted that, in the present disclosure, the terms "comprise", "include" or any other variations thereof are meant to cover non-exclusive including, so that the process, method, article or device including a series of elements do not only include those elements, but also include other elements that are not explicitly listed or also include the inherent elements of the process, method, article or device. In the case that there are no more restrictions, an element qualified by the statement "includes a ..." does not exclude the presence of additional identical elements in the process, method, article or device that includes said element. In addition, it should be noted that the scope of the methods and devices in the embodiments of the present disclosure is not limited to performing functions in the order shown or discussed, but may also include performing functions in a substantially simultaneous manner or in reverse order according to the functions involved. For example, the described methods may be performed in an order different from that described, and various steps may be added, omitted, or combined. In addition, features described with reference to certain examples may be combined in other examples.

From the description of the above embodiments, those skilled in the art can clearly understand that the method according to the above embodiments can be implemented by means of software, together with a necessary general hardware platform, and of course can also be implemented by means of hardware, but in many cases the former means is a better implementation. Based on this understanding, the essence of the present disclosure, that is, the part of the technical solutions according to the present disclosure, that contributes to the prior art, can be embodied in the form of a computer software product. The computer software product may be stored in a storage medium (e.g., an ROM/RAM, a magnetic disk, or an optical disc) and contain instructions to enable a terminal (e.g., a mobile phone, a computer, a server, or a network device, etc.) to perform the method described in each of the embodiments of the present disclosure.

The embodiments of the present disclosure are described above with reference to the accompanying drawings, however the present disclosure is not limited to the above specific implementations, which are merely illustrative, rather than restrictive. Under the motivation of the present disclosure, those skilled in the art can also make many variations without departing from the principles of the present disclosure and the protection scope of the claims as attached. These variations are to be encompassed by the protection scope of present disclosure.

In the description of this specification, descriptions with reference to the terms "an embodiment", "some embodiments", "an exemplary embodiment", "an example", "a specific example", or "some examples" etc., mean that specific features, structure, materials or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although embodiments of the present disclosure have been illustrated and described, it is conceivable for those of ordinary skill in the art that various changes, modifications, replacements, and variations can be made to these embodiments without departing from the principles and purpose of the present disclosure. The scope of the present disclosure shall be defined by the claims as appended and their equivalents.

## Claims

1. A screen casting method, applied in a charging pile, the screen casting method comprising:
establishing a near-field communication connection with a vehicle; and
sending, when the near-field communication connection is successfully established, first information to an electronic device related to the vehicle, to cause the electronic device to display a first interface, wherein the first interface is a human-computer interaction interface corresponding to the charging pile.

2. The screen casting method according to claim 1, wherein said establishing the near-field communication connection with the vehicle comprises:
establishing the near-field communication connection with the vehicle in response to detecting that the vehicle has established an interface connection with the charging pile; or
establishing the near-field communication connection with the vehicle in response to detecting that no first application is installed on the electronic device, wherein the first application is an application for controlling the charging pile; or
establishing the near-field communication connection with the vehicle in response to detecting that the vehicle or the electronic device is within a first range of the charging pile.

3. The screen casting method according to claim 1, wherein the electronic device related to the vehicle comprises at least one of an on-board device of the vehicle, an electronic device in the vehicle, an electronic device within a first range of the charging pile.

4. The screen casting method according to claim 3, wherein said sending the first information to the electronic device related to the vehicle comprises at least one of:
sending the first information to the on-board device of the vehicle when a user is in the vehicle or the vehicle is in a started state;
sending, when the vehicle is not started, the first information to the electronic device in the vehicle or to the electronic device within the first range of the charging pile;
sending the first information to the electronic device within the first range of the charging pile when no user is in the vehicle.

5. A screen casting method, applied in an electronic device related to a vehicle, the screen casting method comprising:
establishing a near-field communication connection with a charging pile; and
receiving, when the near-field communication connection is successfully established, first information sent by the charging pile to display a first interface, wherein the first interface is a human-computer interaction interface corresponding to the charging pile.

6. The screen casting method according to claim 5, wherein said establishing the near-field communication connection with the charging pile comprises:
establishing the near-field communication connection between the electronic device and the charging pile in response to detecting that the vehicle has established an interface connection with the charging pile; or
establishing the near-field communication connection between the electronic device and the charging pile in response to detecting that no first application is installed on the electronic device, wherein the first application is an application for controlling the charging pile; or
establishing the near-field communication connection between the electronic device and the charging pile in response to detecting that the vehicle or the electronic device is within a first range of the charging pile.

7. The screen casting method according to any one of claims 5 and 6, further comprising, prior to said establishing the near-field communication connection with the charging pile:
obtaining a state of a near-field communication function of the electronic device; and
sending an instruction when the near-field communication function of the electronic device is not enabled, to enable the near-field communication function of the electronic device.

8. A screen casting apparatus, applied in a charging pile, the screen casting apparatus comprising a first communication unit configured to:
establish a near-field communication connection with a vehicle, and
send, when the near-field communication connection is successfully established, first information to an electronic device related to the vehicle, to cause the electronic device to display a first interface, wherein the first interface is a human-computer interaction interface corresponding to the charging pile.

9. A screen casting apparatus, applied in an electronic device related to a vehicle, the screen casting apparatus comprising:
a second communication unit configured to establish a near-field communication connection with a charging pile; and
a first processing unit configured to receive, when the near-field communication connection is successfully established, first information sent by the charging pile to display a first interface, wherein the first interface is a human-computer interactive interface corresponding to the charging pile.

10. An electronic device, comprising:
a memory;
a processor; and
a computer program stored in the memory and executable by the processor, wherein the processor, when executing the computer program, implements the screen casting method according to any one of claims 1 to 4 or the screen casting method according to any one of claims 5 to 7.

11. A non-transitory computer-readable storage medium, having a computer program stored thereon, wherein the computer program, when executed by a processor, implements the screen casting method according to any one of claims 1 to 4 or the screen casting method according to any one of claims 5 to 7.
